# EUROPÄISCHE PATENTSCHRIFT

(11) **EP 1 768 450 B1**
(45) Veröffentlichungstag und Bekanntmachung des Hinweises auf die Patenterteilung: **28.11.2018**
(21) Anmeldenummer: 06120583.7
(22) Anmeldetag: 13.09.2006
(51) Int. Cl.: H01Q 1/27, H04R 25/00

(54) **Hörhilfegerät mit einer Antenne**
Hearing-aid device with antenna
Dispositif de prothèse auditive avec antenne

(30) Priorität: 27.09.2005 DE 102005046169
(43) Veröffentlichungstag der Anmeldung: 28.03.2007
(73) Patentinhaber: Sivantos GmbH, 91058 Erlangen (DE)
(72) Erfinder: Niederdränk, Torsten, 259293, Singapore (SG)
(74) Vertreter: FDST Patentanwälte

(56) Entgegenhaltungen:
- EP-A2- 1 341 397
- EP-A2- 1 465 457
- EP-A2- 1 583 395
- DE-B3-102004 019 353
- DE-U1- 8 708 892
- DE-U1- 20 114 461
- US-A- 3 363 255
- US-A1- 2004 264 723
- US-A1- 2005 068 250
- US-A1- 2005 168 396
- US-B1- 6 728 383

## Beschreibung

Die Erfindung betrifft ein Verfahren zur Herstellung einer Gehäuseschale für ein Hörhilfegerät sowie ein Hörhilfegerät mit einer Gehäuseschale, einem Eingangswandler zur Aufnahme eines Eingangssignals und Wandlung in ein elektrisches Eingangssignal, einer Signalverarbeitungseinheit zur Verarbeitung des elektrischen Eingangssignals, einem Ausgangswandler zur Wandlung des verarbeiteten elektrischen Eingangssignal in ein von einem Benutzer als akustisches Signal wahrnehmbares Ausgangssignal und einer Antenne oder Spule zur drahtlosen Signalübertragung zwischen dem Hörhilfegerät und einem weiteren Gerät.

Moderne Hörhilfegeräte bieten häufig die Möglichkeit der drahtlosen Signalübertragung zwischen einem Hörhilfegerät und einem weiteren Gerät, beispielsweise einem weiteren Hörhilfegerät, einem Kommunikationsgerät oder einer Fernbedienung.
Zum drahtlosen Senden und Empfangen von Daten weisen die Hörhilfegeräte eine Antenne oder Spule auf.

Das Gehäuse eines in dem Ohr tragbaren Hörhilfegerätes (IdO) setzt sich häufig aus einer individuell geformten Gehäuseschale und einer vorgefertigten Faceplate zusammen. Zur Vereinfachung des Herstellungsprozesses werden Hörhilfegeräte-komponenten, wie Schallwandler, Bauelemente zur Signalverarbeitung oder eine Batterie zur Spannungsversorgung, nach Möglichkeit an der Faceplate angeordnet. Auch die zum drahtlosen Senden oder Empfangen erforderliche Antenne oder Spule kann während des Herstellungsprozesses an der Faceplate angeordnet werden. Dadurch vergrößert sich allerdings bei der Faceplate der zur Anordnung von Bauelementen erforderliche Platzbedarf. Ferner ist es schwierig, die an der Faceplate angeordnete Antenne bzw. Spule individuell auszurichten. Darüber hinaus wird häufig - je nach individueller Anatomie der Ohrkanäle - der verfügbare Raum im Ohrkanal nicht optimal ausgenutzt.

Bei der Herstellung von Hörhilfegeräten gehören mittlerweile Verfahren zur Herstellung von Gehäuseschalen zum Stand der Technik, bei denen zunächst Daten über den individuellen Hörkanal eines Hörhilfegeräteträgers gewonnen werden. Aus diesen Daten wird in einem CAD-Prozess ein Computermodell der Gehäuseschale eines zu fertigenden Hörhilfegerätes erzeugt. Neben der individuellen Gehäuseschale werden auch die übrigen Komponenten des Hörhilfegerätes (Schallwandler, Signalprozessoren, Batterie etc.) als virtuelle Computermodelle erzeugt. Dadurch lässt sich das Hörhilfegerät vor der eigentlichen Herstellung bereits komplett als Computermodell erzeugen. Insbesondere kann bereits anhand des Computermodells geklärt werden, ob die gewünschten Bauteile in der individuellen Gehäuseschale Platz finden. Gegebenenfalls können das Design der Gehäuseschale angepasst oder andere Komponenten ausgewählt werden. Zur Herstellung der Gehäuseschale werden die so gewonnenen Daten schließlich einer Maschine zugeführt, die aus dem Rechnermodell eine individuelle Gehäuseschale erzeugt. Derartige Maschinen sind auf dem Gebiet des Rapid Prototyping seit langem bekannt, wobei die Herstellung nach unterschiedlichen Verfahren erfolgen kann, von denen das SLS-Verfahren (selective laser sintering), das SLA-Verfahren (stereo lithographie) oder das DLP-Verfahren (digital light processing) zur Herstellung von Gehäuseschalen von Hörhilfegeräten gebräuchlich sind. Bei einem in dem Ohr tragbaren Hörhilfegerät wird eine danach gefertigte, individuelle Gehäuseschale in der Regel mit einer industriell vorgefertigten Faceplate zusammengefügt, die bereits einen Großteil der elektronischen Hörhilfegeräte-Komponenten trägt.

Aus der EP 0 516 808 E1 ist ein Verfahren zum Herstellen einer individuell an die Konturen eines Ohrkanals eines Benutzers angepassten Gehäuseschale für ein Hörhilfegerät bekannt. Das Verfahren beruht auf Prozessschritten, die aus dem Bereich des Rapid Prototyping bekannt sind.

Aus der US 2005/0074138 A1 ist eine Halterung zur Befestigung eines Hörers in einem Hörhilfegerät bekannt. Die Halterung umfasst einstückig mit der Gehäuseschale ausgebildete Komponenten, die gleichzeitig mit dem Gehäuse hergestellt werden.

Aus der DE 102004017832 B3 ist ein Hörgerät bekannt, bei dem eine Antenne im Material des Gehäuses oder an dem Hörgerätegehäuse als elektrisch leitende Schicht ausgebildet ist. Damit wird das Gehäuse als Trägermaterial für die Antenne genutzt und es kann auf den sonst beispielsweise auf der Leiterplatte vorzusehenden Platz für die Antenne verzichtet werden.

Aus der DE 10115896 A1 ist ein Hörgerät mit einer Antenne bekannt, die im Gehäuse des Hörgeräts integriert ist.

Die Anbringung einer Antenne oder Spule zur drahtlosen Signalübertragung an einer vorgefertigten Faceplate ist problematisch, da durch diese zusätzliche Komponente und den dafür erforderlichen zusätzlichen Platzbedarf das Montagesystem verändert werden muss. Außerdem wird die Verwendbarkeit der Faceplate stark eingeschränkt.

In dem Dokument EP 1 465 457 A2 ist eine Schutzschale für ein Hinter-dem-Ohr-Hörgerät beschrieben. Mit der Schale kann eine Antenne in Form eines Drahtes verbunden sein. Die Antenne kann dazu in eine Wandung der Schale eingegossen sein. Die Antenne kann auch an einer Innenseite der Schale befestigt sein. Als weitere Möglichkeit der Befestigung wird das Bonden des Antennendrahtes an die Schaleninnenseite genannt. Zum Verbinden der Antenne mit dem Hinter-dem-Ohr-Hörgerät ist an dessen Außenseite ein entsprechender Anschlusskontakt vorgesehen.

In dem Dokument US 2005/0068250 A1 ist eine Halteeinrichtung für Zuleitungskabel einer Mobilfunkantenne beschrieben. Die Zuleitungskabel können in die Halteeinrichtung eingeschnappt werden. Bei den Zuleitungskabeln handelt es sich um Koaxialkabel.
In dem Dokument DE 87 08 892 U1 ist ein Hörgerät beschrieben, bei dem eine Antennenspule in einen Schutzkörper eingegossen ist, der in einem Gehäuse des Hörgeräts eingebaut ist.
In den Dokumenten DE 10 2004 019 353 B3 und DE 201 14 461 U1 sind weitere Hörhilfegeräte mit Antennen beschrieben. Zu Mitteln zum Platzieren und Befestigen der Antennen mit einer festgelegten Ausrichtung in den Gehäusen der Hörhilfegeräte ist in den Dokumenten nichts gesagt.
In dem Dokument US 2004/0264723 A1 ist ein in dem Ohr tragbares Hörhilfegerät beschrieben. In einer individuell geformten Gehäuseschale kann ein Sockel vorgesehen sein, an welchem ein Hörer im Inneren der Gehäuseschale befestigt werden kann. Der Sockel kann eine Vertiefung aufweisen, in welche eine Kugel eines Haltearms des Hörers eingeschnappt werden kann.
In dem Dokument EP 1 341 397 A2 ist ein in dem Ohr tragbares Hörhilfegerät beschrieben, bei dem eine Faceplate ein Gehäuse verschließt. Getrennt von dem Modul in dem Gehäuse ist noch ein Hörer eingebaut. Der Hörer ist aus akustischen Gründen von der Faceplate getrennt.

In dem Dokument US 6 728 383 B1 ist ein in-dem-Ohr Hörhilfegerät beschrieben, wobei die elektrischen Elemente in der Gehäuseschale befestigt sind.

Aufgabe der vorliegenden Erfindung ist es daher, die Anbringung einer Antenne oder Spule zur drahtlosen Signalübertragung in dem Gehäuse eines Hörhilfegerätes zu verbessern.
Diese Aufgabe wird gelöst durch ein Hörhilfegerät mit den Merkmalen des Patentanspruches 1. Ferner wird die Aufgabe gelöst durch ein Verfahren mit den Verfahrensschritten gemäß Patentanspruch 3.

Bei einem Hörhilfegerät wird mittels eines Eingangswandlers ein Eingangssignal aufgenommen und in ein elektrisches Eingangssignal überführt. Üblicherweise dient als Eingangswandler wenigstens ein Mikrofon, welches ein akustisches Eingangssignal aufnimmt. Moderne Hörhilfegeräte umfassen häufig ein Mikrofonsystem mit mehreren Mikrofonen, um einen von der Einfallsrichtung akustischer Signale abhängigen Empfang, eine Richtcharakteristik, zu erreichen. Die Eingangswandler können jedoch auch eine Telefonspule oder eine Antenne umfassen zur Aufnahme elektromagnetischer Eingangssignale. Die durch den Eingangswandler in elektrische Eingangssignale gewandelten Eingangssignale werden zur Weiterverarbeitung und Verstärkung einer Signalverarbeitungseinheit zugeführt. Die Weiterverarbeitung und Verstärkung erfolgt zum Ausgleich des individuellen Hörverlustes eines Hörhilfegeräteträgers in der Regel in Abhängigkeit der Signalfrequenz. Die Signalverarbeitungseinheit erzeugt ein elektrisches Ausgangssignal, welches über einen Ausgangswandler dem Gehör des Hörhilfegeräteträgers zugeführt wird, so dass dieser das Ausgangssignal als akustisches Signal wahrnimmt. Als Ausgangswandler werden üblicherweise Hörer verwendet, die ein akustisches Ausgangssignal erzeugen. Es sind jedoch auch Ausgangswandler zur Erzeugung mechanischer Schwingungen bekannt, die direkt bestimmte Teile des Gehörs, wie beispielsweise die Gehörknöchelchen zu Schwingungen anregen. Weiterhin sind Ausgangswandler bekannt, die direkt Nervenzellen des Gehörs stimulieren.

Die Erfindung kann vorteilhaft bei computergesteuerten Herstellungsverfahren zur Herstellung von Hörhilfegeräten und insbesondere zur Herstellung im Ohr tragbarer Hörhilfegeräte (IdO) angewendet werden, bei denen eine zu fertigende Gehäuseschale zunächst in Form von Rechnerdaten vorliegt. Anschließend erfolgt rechnergestützt eine virtuelle Platzierung elektronischer Komponenten in der Gehäuseschale. Mittels rechnergestützter Optimierungsprozesse können sowohl die Platzierung einzelner Komponenten als auch die Formgebung der Gehäuseschale optimiert werden. Diese Optimierung kann durch Bedienung einer Benutzeroberfläche manuell mit Hilfe eines Computers durchgeführt werden oder in einem vollautomatisierten Prozess erfolgen oder aber in einer Mischform, bei der sowohl eine Optimierung durch einen automatisch am Computer ablaufenden Algorithmus als auch durch manuelles Zutun der den Computer bedienenden Person erfolgen.

Gemäß der Erfindung wird neben anderen Hörhilfegerätekomponenten (Faceplate, Receiver etc.) auch die Antenne bereits bei dem Entwurf des Hörhilfegerätes mittels des CAD-Systems berücksichtigt. Dadurch wird die Platzierung der Antenne bzw. Spule automatisch durch eine entsprechende Software oder in Verbindung mit manuellen Benutzereingaben optimiert. Ist eine geeignete Position für die Antenne bzw. Spule gefunden, so werden vorzugsweise automatisch zunächst virtuell Mittel zur Platzierung und/oder Befestigung der Antenne oder Spule in der Gehäuseschale erzeugt. Bei diesen Mitteln handelt es sich um einstückig mit der Gehäuseschale verbundene Anformungen, mittels derer die Antenne bzw. Spule mit einer festgelegten Ausrichtung in dem Gehäuse platziert und befestigt werden kann. Diese Anformungen werden dann real während der Herstellung der Gehäuseschale erzeugt.

Die Erfindung bietet den Vorteil, dass die Antenne bzw. Spule während des rechnergestützten Entwurfs des betreffenden Hörhilfegerätes mittels des CAD-Systems berücksichtigt wird. Die Antenne oder Spule wird direkt in der Gehäuseschale platziert und die Faceplate muss daher nicht um eine Antenne bzw. Spule erweitert werden, so dass kein erhöhter Platzbedarf durch die Antenne bzw. Spule an der Faceplate entsteht. In der Regel kann in der Gehäuseschale ohnehin vorhandener Freiraum für die Anordnung der Antenne oder Spule genutzt werden. Ein Vergrößern der Gehäuseschale zur Unterbringung der Antenne bzw. Spule ist daher nur in seltenen Fällen erforderlich. Ferner ermöglichen die durch die Erfindung in der Gehäuseschale erzeugten Aufnahmen zur Platzierung und/oder Befestigung der Antenne bzw. Spule eine schnelle Montage der Antenne bzw. Spule in der fertigen Gehäuseschale. Dadurch können die Herstellungskosten des betreffenden Hörhilfegerätes gesenkt werden. Darüber hinaus bietet die rechnergestützte Platzierung der Antenne bzw. Spule in der Gehäuseschale nicht nur eine Optimierung des Platzbedarfes, sondern auch eine Optimierung hinsichtlich ihrer Funktion. Je nachdem, für welchen Übertragungszweck die Antenne hauptsächlich vorgesehen ist, kann neben der Position auch die Ausrichtung optimiert werden. Z.B. lassen sich so bei einem binauralen Hörhilfegerätesystem mit einem im linken Ohr und einem im rechten Ohr getragenen Hörhilfegerät die verwendeten Antennen bzw. Spulen derart ausrichten, dass die Signalübertragung zwischen den beiden Hörhilfegeräten optimiert wird. Dies kann beispielsweise dadurch erfolgen, dass die Antennen zweier in den Ohren eines Benutzers getragener Hörhilfegeräte derart zueinander ausgerichtet sind, dass eine optimierte Signalübertragung erfolgt. Dadurch wird die notwendige Sendeleistung herabgesetzt bzw. der Empfang verbessert.

Die Erfindung ermöglicht die Verwendung einer Antenne bzw. Spule zur drahtlosen Signalübertragung in Verbindung mit einem Hörhilfegerät auch bei einer sehr kleinen Gerätebauform, z.B. einem CIC- (Completely In Canal-) Hörhilfegerät.

Die Erfindung wird nachfolgend anhand von Ausführungsbeispielen näher erläutert. Es zeigen:
- Fig.1: ein Hörhilfegerät gemäß der Erfindung mit einstückig an der Gehäuseschale angeformten Befestigungsmitteln für eine Antenne,
- Fig. 2: eine Schnapp-Verbindung für die Antenne,
- Fig. 3: eine Klebe-Verbindung für die Antenne,
- Fig. 4: ein Ablaufdiagramm bezüglich der Herstellung von Befestigungsmitteln für eine Antenne bzw. Spule in einer Gehäuseschale.

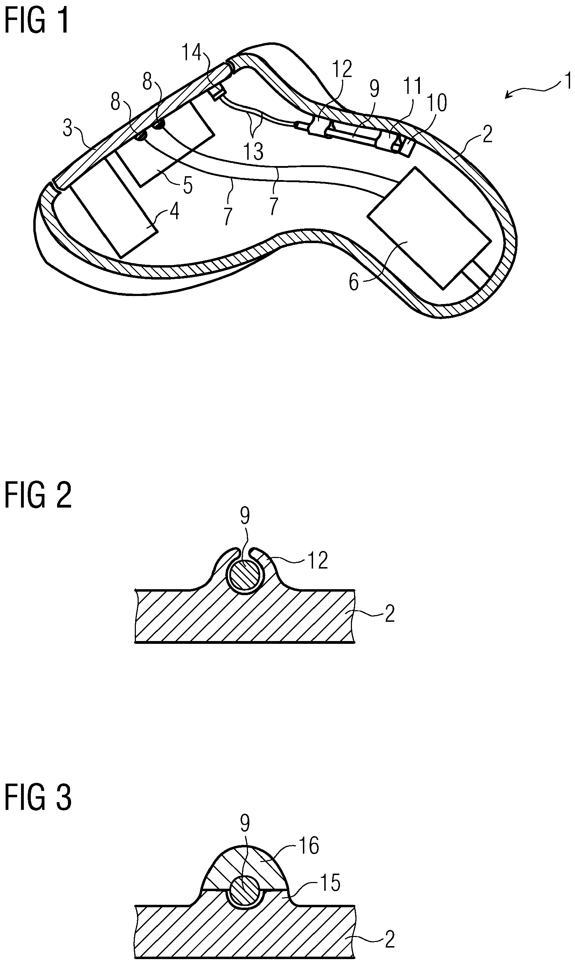

Figur 1 zeigt ein in dem Ohr tragbares Hörhilfegerät 1 mit einer individuell angefertigten Gehäuseschale 2. Derartige Gehäuseschalen werden häufig nach Herstellungsverfahren hergestellt, die aus dem Bereich des Rapid Prototyping bekannt sind. Dabei werden zunächst Daten bezüglich des Ohrkanals eines Benutzers gewonnen und in einem Rechner gespeichert. Aus diesen Daten wird schließlich ein Computermodell der Gehäuseschale errechnet. Dabei wird das Modell so angepasst, dass die Außenkonturen exakt zu den Konturen des individuellen Ohrkanals passen und alle für das Hörhilfegerät vorgesehenen elektronischen Komponenten in der Gehäuseschale Platz finden. Daten der so am Rechner entworfenen Gehäuseschale werden schließlich an eine Fertigungsmaschine übertragen, die aus den Rechnerdaten die gewünschte Gehäuseschale erzeugt. Gängige Fertigungsverfahren sind hierbei z.B. das SLS-Verfahren (selective laser sintering) oder das SLA-Verfahren (stereo lithographie).

Zur Vervollständigung des betreffenden Hörhilfegerätes wird in die fertige Gehäuseschale 2 ein Hörer 6 eingebracht, z.B. eingeklebt, und das Gehäuse beispielsweise mit einer industriell vorgefertigten Faceplate geschlossen. An der Faceplate befinden sich bereits elektronische Bauelemente wie ein Mikrofon 4, ein Halbleiterbauelement 5 (z.B. Signalprozessor) und eine Batterielade (nicht dargestellt). Zur elektrischen Kontaktierung des Hörers 6 mit den elektronischen Komponenten der Faceplate 3 sind im Ausführungsbeispiel Kabel 7 sowie Lötverbindungen 8 vorgesehen. Beim Zusammenbau des Hörhilfegerätes 1 wird zunächst der Hörer 6 in die Gehäuseschale 2 eingebracht, anschließend werden die Lötverbindungen 8 hergestellt und danach die Faceplate 3 mit der Gehäuseschale 2 verbunden, beispielsweise eingeklipst.

Bei dem Hörhilfegerät gemäß der Erfindung ist zur drahtlosen Signalübertragung zwischen dem Hörhilfegerät 1 und einem weiteren Gerät, beispielsweise einem zweiten Hörhilfegerät gleicher Bauart zur binauralen Versorgung eines Benutzers, eine Sende- und Empfangsantenne 9 vorgesehen. Bei bekannten im Ohr tragbaren Hörhilfegeräten wurde eine derartige Antenne entweder bereits an dem Faceplate vorgesehen oder - ähnlich wie der Hörer 6 - vor dem Zusammenbau des Hörhilfegerätes in der Schale befestigt, beispielsweise eingeklebt.

Wird die Antenne bereits an der Faceplate vorgesehen, so hat dies den Nachteil, dass damit prinzipiell mehr Platz für die Faceplate vorgesehen werden muss. Dies steht jedoch dem Wunsch nach einer weitestgehenden Miniaturisierung der Faceplate und des gesamten Hörhilfegerätes entgegen. Auch das Einbringen einer Antenne in die Gehäuseschale vor dem Zusammenbau des betreffenden Hörhilfegerätes kann Probleme bereiten, da erst ein geeigneter Platz in der Gehäuseschale gesucht werden muss. Unter Umständen kann es so beim Zusammenbau des Hörhilfegerätes zur Kollision der Antenne mit an der Faceplate angeordneten Bauelementen kommen.

Gemäß der Erfindung wird nun die Antenne 9 bereits beim Entwurf der Gehäuseschale 2 am Computer, also in dem Rechnermodell berücksichtigt. Da in dem Rechnermodell vorzugsweise auch alle weiteren elektronischen Komponenten des Hörhilfegerätes 1 berücksichtigt sind, kann schon vor dem Zusammenbau ein geeigneter Platz für die Antenne 9 ermittelt werden, derart, dass keine Kollision der Antenne 9 mit anderen Bauelementen erfolgt. Um diesen am Rechnermodell gefundenen Platz für die Antenne 9 später auch beim Zusammenbau des realen Hörhilfegerätes zu finden, werden an der Gehäuseschale 2 Befestigungsmittel zur Befestigung der Antenne 9 zunächst virtuell am Rechnermodell und später auch an der realen Gehäuseschale 2 vorgesehen. Dies hat den Vorteil, dass anhand der in die Gehäuseschale 2 integrierten Befestigungsmittel beim Zusammenbau des Hörhilfegerätes 1 sofort ein geeigneter Platz für die Anbringung der Antenne 9 erkennbar ist. Eine Person, die das Hörhilfegerät zusammensetzt, muss daher nicht erst lange nach einem geeigneten Platz suchen.

Die Erfindung bietet weiterhin den Vorteil, dass durch die Befestigungsmittel bereits eine bestimmte Ausrichtung der Antenne in der Gehäuseschale 2 gegeben ist. Diese Ausrichtung wird bereits in dem Computermodell des Hörhilfegerätes 1 festgelegt. Dadurch wird auch eine bestimmte Ausrichtung der Antenne bezüglich des Ohrkanals des individuellen Benutzers des Hörhilfegerätes 1 festgelegt. Vorteilhaft wird die Antenne in der Gehäuseschale 2 bzw. dem Ohrkanal eines Benutzers so ausgerichtet, dass eine optimierte Signalübertragung zwischen dem Hörhilfegerät und einem baugleichen Hörhilfegerät in dem zweiten Ohrkanal des Benutzers ermöglicht wird. Zum Beispiel werden die beiden Antennen der Hörhilfegeräte entlang einer Geraden oder parallel zueinander ausgerichtet.

In Bezug auf eine konkrete Ausgestaltung der Befestigungsmittel ist im Rahmen der Erfindung eine Vielzahl an Alternativen möglich. Zwei davon werden nachfolgend beschrieben:
In dem Ausführungsbeispiel gemäß Figur 1 sind an der Gehäuseschale Rastnasen 11 und 12 angeformt, in die die Antenne 9 zur Befestigung eingedrückt werden kann. Die Antenne 9 wird somit nach Art eines Schnappverschlusses in der Gehäuseschale 2 befestigt und ausgerichtet. Um eine exakte Positionierung hinsichtlich aller Raumrichtungen zu erreichen, ist an der Gehäuseschale 2 ferner ein Anschlag 10 angeformt. Auch dieser ist gemäß der Erfindung vorzugsweise einstückig mit der Gehäuseschale 2 ausgebildet. Die Antenne 9 wird dann bei der Montage derart in die Aufnahmen 11 und 12 eingedrückt, dass das hintere Ende der Antenne 9 an dem Anschlag 10 anliegt. Die Antenne ist damit befestigt und exakt positioniert. Zur elektrischen Kontaktierung der Antenne 9 mit der Faceplate 3 sind Leitungen 13 sowie eine Steckverbindung 14 vorgesehen. Die Steckverbindung 14 ermöglicht eine lotfreie Verbindung der Antenne 9 mit der Faceplate 3. Alternativ kann jedoch auch eine Lötverbindung vorgesehen sein, wie dies in Verbindung mit dem Hörer 6 und den Lötverbindungen 8 im Ausführungsbeispiel dargestellt ist.

Figur 2 zeigt das in Figur 1 dargestellte Befestigungsmittel 12 im Schnittbild. Das Befestigungsmittel 12 umfasst zwei nasenförmige Anformungen der Gehäuseschale 2, deren Dicke so bemessen ist, dass eine bestimmte Federwirkung entsteht. Die nasenförmigen Fortsätze sind so weit elastisch, dass die Antenne 9 in die beiden nasenförmigen Anformungen eingedrückt werden kann, wobei sie dann durch die Fortsätze befestigt und fixiert wird, so dass sie auch bei starken Erschütterungen der Gehäuseschale 2 ihre Position innerhalb der Gehäuseschale beibehält. Die Antenne 9 könnte jedoch, z.B. im Reparaturfall, mit einem geeigneten Werkzeug auch wieder aus der Halterung entnommen werden, ohne dabei die Halterung 12 oder die Antenne 9 zu zerstören.

Eine andere Art der Befestigung der Antenne 9 in einem Hörhilfegerät gemäß der Erfindung zeigt Figur 3. Im Unterschied zu den nasenförmigen Fortsätzen gemäß Figur 2 ist hierbei das Befestigungsmittel 15 lediglich als schalenförmige Erhöhung der Gehäuseschale 2 ausgebildet. Dadurch kann beim Zusammenbau des betreffenden Hörhilfegerätes durch einen Blick in die Gehäuseschale sofort der für die Antenne vorgesehene Platz erkannt werden. Die Antenne 9 wird dann in die Schale eingelegt und anschließend mit einem geeigneten Klebstoff 16 befestigt und fixiert. Das schalenförmige Befestigungsmittel 15 kann sich dabei entlang einer wesentlichen Länge der Antenne 9 erstrecken oder nur an einem oder mehreren kurzen Abschnitten entlang der Antenne 9 vorhanden sein, ähnlich wie dies für zwei Befestigungspunkte im vorderen und hinteren Bereich der Antenne 9 aus Figur 1 ersichtlich ist.

Die Erfindung kann besonders vorteilhaft bei der Herstellung im Ohr tragbarer Hörhilfegeräte angewendet werden. Sie ist jedoch nicht auf diese besondere Gehäusebauform beschränkt. Nach dem gleichen Prinzip kann beispielsweise auch eine Gehäuseschale eines hinter dem Ohr tragbaren Hörhilfegerätes hergestellt werden.

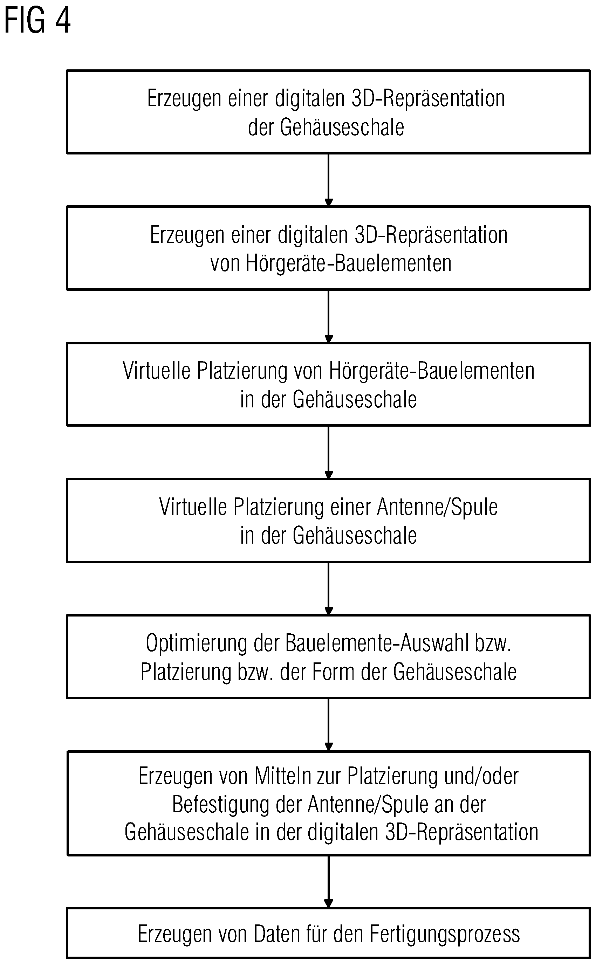

Einen Überblick über den Entwurf und die Herstellung einer Gehäuseschale gemäß der Erfindung zeigt das Ablaufdiagramm gemäß Figur 4. Der Entwurfsprozess beginnt mit der Erzeugung einer digitalen 3-D-Represenatation der Gehäuseschale, die aus Rechnerdaten bezüglich des Gehörgangs eines Benutzers errechnet wird. Neben den Daten bezüglich des Gehörgangs existieren auch Daten bezüglich der äußeren Form und Größe der elektrischen Komponenten, die für das Hörhilfegerät verwendet werden sollen. Es ist somit auch eine digitale 3-D-Representation der Hörhilfegeräte-Bauelemente in dem verwendeten Rechner vorhanden. Dadurch ist es möglich, in einem nächsten Bearbeitungsschritt eine virtuelle Platzierung der vorgesehenen Hörhilfegeräte-Bauelemente in der virtuellen Gehäuseschale durchzuführen. Ebenso kann auch mittels des Rechners ein geeigneter Platz für die Antenne bzw. Spule in der Gehäuseschale ermittelt werden. Anschließend kann in einem weiteren Bearbeitungsschritt eine Optimierung erfolgen. Dabei kann eine Optimierung bei der Auswahl der verwendeten elektronischen Bauelemente erfolgen, so dass eine gewünschte Gehäusebauform (z.B. CIC) des herzustellenden Hörhilfegerätes möglichst kostengünstig erreicht wird. Auch die Platzierung der ausgewählten Bauelemente oder auch die Form der Gehäuseschale können zur Erfüllung bestimmter äußerer Randbedingungen angepasst und optimiert werden. Ist gemäß der Erfindung ein geeigneter Platz und eine geeignete Ausrichtung für die Antenne bzw. Spule gefunden, so werden zunächst in der digitalen 3-D-Representation des Hörhilfegerätes Mittel zur Platzierung und/oder Befestigung der Antenne bzw. Spule an der Gehäuseschale erzeugt. Diese Mittel können entweder lediglich den Platz festlegen, an dem die Antenne bzw. Spule in der Gehäuseschale befestigt werden soll, wobei die eigentliche Befestigung bei der Herstellung des Hörhilfegerätes, z.B. durch Aufbringen eines Klebstoffes, erfolgt. Es können jedoch auch gleich einstückig mit der Gehäuseschale ausgebildete Befestigungsmittel erzeugt werden, so dass eine Rast- oder Schnappverbindung für die Antenne bzw. Spule entsteht, so dass weitere Befestigungsmittel, z.B. Klebstoff, nicht mehr erforderlich sind. Neben den Daten bezüglich der zu fertigenden Gehäuseschale werden dann auch Daten bezüglich der Mittel zur Platzierung und/oder Befestigung der Antenne bzw. Spule erzeugt und an die Fertigungsmaschine weitergegeben. Eine damit gefertigte Gehäuseschale weist dann am Ende des Fertigungsprozesses bereits die entsprechenden Befestigungsmittel für die Antenne bzw. Spule auf.

## Patentansprüche

1. Hörhilfegerät (1), ausgebildet als in dem Ohr tragbares Hörhilfegerät (1), umfassend:
- eine individuell angefertigte Gehäuseschale (2),
- eine mit der Gehäuseschale (2) verbundene Faceplate (3),
- einen Eingangswandler (4) zur Aufnahme eines Eingangssignals und Wandlung in ein elektrisches Eingangssignal,
- eine Signalverarbeitungseinheit zur Verarbeitung des elektrischen Eingangssignals,
- einen Ausgangswandler zur Wandlung des verarbeiteten elektrischen Eingangssignals in ein von einem Benutzer als akustisches Signal wahrnehmbares Ausgangssignal und
- eine Antenne (9) oder Spule zur drahtlosen Signalübertragung zwischen dem Hörhilfegerät (1) und einem weiteren Gerät,
**gekennzeichnet dadurch, dass**
das Hörhilfegerät (1) einstückig mit der Gehäuseschale (2) verbundene Anformungen (11, 12, 15) zur Platzierung und/oder Befestigung der Antenne (9) oder Spule in der Gehäuseschale (2), welche dazu ausgelegt sind, eine lösbare Befestigung der Antenne (9) oder Spule in der Gehäuseschale (2) oder eine Klebverbindung (16) der Antenne (9) oder Spule in der Gehäuseschale (2) zu erzeugen und Mittel (14) zur lösbaren Kontaktierung der Antenne (9) bzw. Spule mit der Faceplate (3) aufweist.

2. Hörhilfegerät (1) nach Anspruch 1, wobei die lösbare Befestigung eine Rast- oder Schnappverbindung ist.

3. Verfahren zur Herstellung einer Gehäuseschale (2) für ein Hörhilfegerät (1) nach einem der Ansprüche 1 bis 2, **dadurch gekennzeichnet, dass** in die Gehäuseschale (2) einstückig mit der Gehäuseschale (2) verbundene Anformungen (11, 12, 15) zur Befestigung einer Antenne (9) bzw. Spule in der Gehäuseschale (2) integriert werden, wobei ein Computermodell der Gehäuseschale (2) erzeugt wird und die Position und/oder die Ausrichtung der Antenne (9) bzw. Spule anhand des Computermodells optimiert werden und wobei für ein Hörhilfegerätesystem mit dem Hörhilfegerät (1) und einem zweiten Hörhilfegerät zur beidohrigen Versorgung eines Benutzers die Antenne oder Spule so ausgerichtet wird, dass eine optimierte Signalübertragung zwischen den beiden Hörhilfegeräten erfolgt.

## Claims

1. Hearing-aid device (1), formed as an in-the-ear hearing-aid device (1), comprising:
- a customized housing shell (2),
- a faceplate (3), connected to the housing shell (2),
- an input transducer (4) for picking up an input signal and converting it into an electrical input signal,
- a signal processing unit for processing the electrical input signal,
- an output transducer for converting the processed electrical input signal into an output signal that can be perceived by a user as an acoustic signal and
- an antenna (9) or coil for wireless signal transmission between the hearing-aid device (1) and a further device,
**characterized in that**
the hearing-aid device (1) has formations (11, 12, 15) for placing and/or fastening the antenna (9) or coil in the housing shell (2), which are connected in one piece to the housing shell (2) and are designed for producing a releasable fastening of the antenna (9) or coil in the housing shell (2) or an adhesive bond (16) of the antenna (9) or coil in the housing shell (2), and has means (14) for establishing a releasable contact between the antenna (9) or coil and the faceplate (3).

2. Hearing-aid device (1) according to Claim 1, the releasable fastening being a catch or snap connection.

3. Method for producing a housing shell (2) for a hearing-aid device (1) according to either of Claims 1 and 2, **characterized in that** formations (11, 12, 15) which are connected in one piece to the housing shell (2) and are intended for fastening an antenna (9) or coil in the housing shell (2), are integrated into the housing shell (2), wherein a computer model of the housing shell (2) is generated and the position and/or the alignment of the antenna (9) or coil is/are optimized on the basis of the computer model and wherein, for a hearing-aid device system comprising the hearing-aid device (1) and a second hearing-aid device as a binaural hearing system, the antenna or coil is aligned such that an optimized signal transmission between the two hearing-aid devices takes place.

## Revendications

1. Appareil d'aide auditive (1), configuré sous la forme d'un appareil d'aide auditive (1) pouvant être porté dans l'oreille, comprenant :
- une coque de boîtier (2) confectionnée individuellement,
- une plaque de face (3) reliée à la coque de boîtier (2),
- un convertisseur d'entrée (4) destiné à enregistrer un signal d'entrée et à le convertir en un signal d'entrée électrique,
- une unité de traitement de signal destinée à traiter le signal d'entrée électrique,
- un convertisseur de sortie destiné à convertir le signal d'entrée électrique traité en un signal de sortie perceptible par l'utilisateur sous la forme d'un signal acoustique et
- une antenne (9) ou une bobine destinée à la transmission de signal sans fil entre l'appareil d'aide auditive (1) et un autre appareil,
**caractérisé en ce que**
l'appareil d'aide auditive (1) possède des moulages (11, 12, 13) reliés d'un seul tenant avec la coque de boîtier (2) servant à positionner et/ou à fixer l'antenne (9) ou la bobine dans la coque de boîtier (2), lesquels sont conçus pour produire une fixation amovible de l'antenne (9) ou de la bobine dans la coque de boîtier (2) ou une liaison collée (16) de l'antenne (9) ou de la bobine dans la coque de boîtier (2) en vue d'établir un contact amovible de l'antenne (9) ou de la bobine avec la plaque de face (3).

2. Appareil d'aide auditive (1) selon la revendication 1, la fixation amovible étant une liaison par encliquetage ou par enclenchement.

3. Procédé de fabrication d'une coque de boîtier (2) pour un appareil d'aide auditive (1) selon l'une des revendications 1 à 2, caractérisé en ce des moulages (11, 12, 13) reliés d'un seul tenant avec la coque de boîtier (2) et destiné à fixer une antenne (9) ou une bobine dans la coque de boîtier (2) sont intégrés dans la coque de boîtier (2), un modèle informatique de la coque de boîtier (2) étant généré et la position et/ou l'orientation de l'antenne (9) ou de la bobine étant optimisées à l'aide du modèle informatique et l'antenne ou la bobine étant orientées pour un système d'appareils d'aide auditive, comprenant l'appareil d'aide auditive (1) et comprenant un deuxième appareil d'aide auditive destiné à une alimentation binaurale d'un utilisateur, de telle sorte qu'une transmission de signal optimisée a lieu entre les deux appareils d'aide auditive.
